# EUROPÄISCHE PATENTSCHRIFT

(11) **EP 2 533 023 B1**
(45) Veröffentlichungstag und Bekanntmachung des Hinweises auf die Patenterteilung: **15.11.2017**
(21) Anmeldenummer: 12003965.6
(22) Anmeldetag: 21.05.2012
(51) Int. Cl.: G01F 1/58

(54) **Magnetiisch-induktives Durchflussmessgerät**
Magnetic-inductive flow measuring apparatus
Débitmètre à induction magnétique

(30) Priorität: 06.06.2011 DE 102011104799
(43) Veröffentlichungstag der Anmeldung: 12.12.2012
(73) Patentinhaber: KROHNE Messtechnik GmbH, 47058 Duisburg (DE)
(72) Erfinder: Walbrecker, Sven, 46485 Wesel (DE); Neuburger, Stefan, 55271 Stadecken-Elsheim (DE); Neven, Josef, 26540 Mours St. Eusébe (FR)
(74) Vertreter: Gesthuysen, Michael

(56) Entgegenhaltungen:
- EP-A1- 0 626 567
- EP-A2- 2 187 180
- DE-C1- 19 716 119
- GB-A- 2 332 526
- JP-A- 2006 349 539
- JP-A- 2007 315 763
- US-A- 2 583 724

## Beschreibung

Die Erfindung betrifft ein magnetisch-induktives Durchflussmessgerät zur Durchflussmessung eines strömenden Mediums mit einer Messleitung, mit einer Magnetfelderzeugungseinrichtung zur Erzeugung eines die Messleitung wenigstens teilweise durchsetzenden Magnetfeldes, mit zwei Elektroden zum Abgreifen einer in dem strömenden Medium induzierten Messspannung und mit einem die Messleitung, vorzugsweise auch die Magnetfelderzeugungseinrichtung und die Elektroden aufnehmenden Gehäuse, wobei die Messleitung über die Länge einen veränderlichen Querschnitt aufweist und vorzugsweise der Querschnitt im mittleren Bereich der Messleitung geringer ist als am Anfang der Messleitung und an deren Ende, vorzugsweise der Querschnitt der Messleitung in ihrem mittleren Bereich rechteckig, ggf. auch quadratisch ist, und wobei das Gehäuse vorzugsweise einen kreisförmigen Querschnitt hat.

Magnetisch-induktive Durchflussmessgeräte sind sehr umfangreich im Stand der Technik seit Jahrzehnten bekannt; dazu wird exemplarisch auf die Literaturstelle "Technische Durchflussmessung" von Prof. Dr.-Ing. K. W. Bonfig, 3. Auflage, Vulkan-Verlag Essen, 2002, Seiten 123 bis 167, verwiesen.

Das grundlegende Prinzip eines magnetisch-induktiven Durchflussmessgeräts zur Durchflussmessung eines strömenden Mediums geht auf Faraday zurück, der bereits im Jahre 1832 vorgeschlagen hat, das Prinzip der elektrodynamischen Induktion zur Messung der Strömungsgeschwindigkeit eines strömenden Mediums anzuwenden. Nach dem faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das faraday'sche Induktionsgesetz wird bei magnetisch-induktiven Durchflussmessgeräten dadurch ausgenutzt, das mittels einer Magnetfelderzeugungseinrichtung, die üblicherweise zwei bestromte Magnetspulen aufweist, ein Magnetfeld erzeugt und wenigstens teilweise durch eine Messleitung geführt wird, wobei das erzeugte Magnetfeld wenigstens eine Komponente aufweist, die senkrecht zur Strömungsrichtung verläuft. Innerhalb des Magnetfeldes liefert jedes sich durch das Magnetfeld bewegende und eine gewisse Anzahl von Ladungsträgern aufweisenden Volumenelement des strömenden Mediums mit der in diesem Volumenelement entstehenden Feldstärke einen Beitrag zu einer über die Elektroden abgreifbaren Messspannung.

Zu den magnetisch-induktiven Durchflussmessgeräten, von denen die Erfindung ausgeht, wird beispielhaft verwiesen auf die deutschen Offenlegungsschriften DE 197 08 857 A1, DE 10 2004 063 617 A1, DE 10 2008 057 755 A1 oder DE 10 2008 057 756 A1. So beschreibt insbesondere die DE 10 2008 057 755 A1 ein gattungsgemäßes Durchflussmessgerät, von dem die Erfindung ausgeht.

Ein magnetisch-induktives Durchflussmessgerät für die Massenproduktion wird offenbart in der JP 2007 315763 A. Verfahren zum Betreiben von magnetisch-induktiven Durchflussmessgeräten, um Gleichspannungs-Störsignale zu vermeiden, offenbaren die EP 0 626 567 A1 oder die DE 197 16 119 C1. Weitere Ausgestaltungen von magnetisch-induktiven Durchflussmessgeräten lassen sich beispielsweise auch entnehmen der GB 2 332 526 A oder der JP 2006 349539 A. Eine Ausgestaltung eines Durchflussmessgeräts mit einem Magnetkern innerhalb der Messleitung zeigt die US 2,583,724 A.

Sind, wie weiter oben ausgeführt, magnetisch-induktive Durchflussmessgeräte seit Jahrzehnten umfangreich und in einer kaum noch überschaubaren Vielzahl von Ausführungsformen bekannt, so sind auch in Bezug auf magnetisch-induktive Durchflussmessgeräte, wie in vielen weitgehend entwickelten Gebieten der Technik, immer noch Fortschritte erwünscht und auch möglich. Folglich liegt der Erfindung die Aufgabe zugrunde, das eingangs in seinem grundsätzlichen Aufbau beschriebene magnetisch-induktive Durchflussmessgerät zu verbessern, und zwar vor allem in Bezug auf seine Fähigkeit, auch bei sehr unterschiedlichen strömenden Medien, insbesondere auch bei flüssigen Medien, die Feststoffe in erheblicher Größe mit sich führen, eine beachtliche Genauigkeit der Durchflussmessung zu erreichen.

Das nach der Erfindung ausgebildete magnetisch-induktive Durchflussmessgerät ist zunächst und im wesentlichen dadurch gekennzeichnet, dass der Einlassabschnitt der Messleitung aus zwei Teilabschnitten besteht und der in Strömungsrichtung gesehen erste Teilabschnitt einen in Strömungsrichtung größer werdenden Querschnitt und der zweite Teilabschnitt einen in Strömungsrichtung kleiner werdenden Querschnitt aufweisen.

Bei den bekannten magnetisch-induktiven Durchflussmessgeräten, bei denen die Messleitung einen Einlassabschnitt, einen Auslassabschnitt und einen zwischen dem Einlassabschnitt und dem Auslassabschnitt verwirklichten Messabschnitt aufweist, hat der Einlassabschnitt einen in Strömungsrichtung kleiner werdenden Querschnitt und der Auslassabschnitt einen in Strömungsrichtung größer werdenden Querschnitt. Demgegenüber beginnt bei dem erfindungsgemäßen magnetisch-induktiven Durchflussmessgerät der Einlassabschnitt mit einem ersten Teilabschnitt mit einem in Strömungsrichtung größer werdenden Querschnitt.

Bei dem erfindungsgemäßen magnetisch-induktiven Durchflussmessgerät kann der erste Teilabschnitt des Einlassabschnittes der Messleitung eingangsseitig einen im Verhältnis 1 ; 5 bis 1 : 2, vorzugsweise im Verhältnis von etwa 1 : 3 kleineren Querschnitt als ausgangsseitig aufweisen. Insbesondere kann der erste Teilabschnitt des Einlassabschnittes der Messleitung eingangsseitig einen Durchmesser von 15 mm und ausgangsseitig einen Durchmesser von 25 mm aufweisen.

Das, was zuvor in Bezug auf den Einlassabschnitt der Messleitung des erfindungsgemäßen magnetisch-induktiven Durchflussmessgeräts dargestellt ist, muss nicht zwingend auf den Auslassabschnitt der Messleitung übertragen werden. Es empfiehlt sich jedoch eine Ausführungsform, bei der die Ausgangsseite korrespondierend zur Eingangsseite ausgeführt ist, sie also dadurch gekennzeichnet ist, dass der Auslassabschnitt der Messleitung aus zwei Teilabschnitten besteht und der in Strömungsrichtung gesehen erste Teilabschnitt einen in Strömungsrichtung größer werdenden Querschnitt und der zweite Teilabschnitt einen in Strömungsrichtung kleiner werdenden Querschnitt aufweisen. Dabei können die Relationen der Querschnitte genau so realisiert werden, wie das zuvor in Bezug auf die Einlassseite beschrieben worden ist.

Bei magnetisch-induktiven Durchflussmessgeräten, folglich auch bei dem erfindungsgemäßen magnetisch-induktiven Durchflussmessgerät darf die Messleitung natürlich nicht elektrisch leitend ausgeführt sein, jedenfalls nicht an ihrer mit dem strömenden Medium in Berührung kommenden Oberfläche. Bei magnetisch-induktiven Durchflussmessgeräten kann folglich die Messleitung insgesamt aus elektrisch nicht leitendem Material ausgeführt sein, insbesondere aus Kunststoff oder auch aus Keramik. Denkbar sind jedoch auch Ausführungsformen, bei denen die Messleitung im wesentlichen aus elektrisch leitendem Material besteht. Dann muss dafür gesorgt werden, dass die innere, mit dem strömenden Medium in Berührung kommende Oberfläche nicht elektrisch leitend ist. Insoweit empfiehlt es sich, die Messleitung mit einer Halar-Beschichtung oder mit einer PEEK-Beschichtung zu versehen.

Eingangs ist ausgeführt worden, dass bei dem magnetisch-induktiven Durchflussmessgerät, von dem die Erfindung ausgeht, der Querschnitt der Messleitung in ihrem mittleren Bereich, also der Querschnitt des Messabschnittes der Messleitung, rechteckig, gegebenenfalls auch quadratisch ausgeführt sein kann. Vorzugsweise ist der Querschnitt des Messabschnittes der Messleitung jedoch rechteckig ausgeführt. Der Messabschnitt muss selbstverständlich einen solchen Querschnitt aufweisen, dass die Feststoffe, die das flüssige Medium mit sich führt, den Messabschnitt passieren können. Die Schmalseite des Messabschnittes der Messleitung muss also mindestens so groß sein, wie es der maximalen Ausdehnung der vom flüssigen Medium mitgeführten Feststoffe entspricht.

Bei dem erfindungsgemäßen magnetisch-induktiven Durchflussmessgerät können die Elektroden zum Abgreifen einer in dem strömenden Medium induzierten Messspannung sowohl an den Längsseiten des Messabschnittes der Messleitung als auch an den Schmalseiten angeordnet sein; vorzugsweise sind die Elektroden jedoch an den Schmalseiten realisiert. Insoweit wird auf die deutsche Offenlegungsschrift DE 10 2005 019 418 A1 verwiesen. Die Elektroden können also eine leitfähige Diamant-Beschichtung aufweisen. Dazu, wie diese Diamant-Beschichtung im einzelnen realisiert sein kann, wird auf den gesamten Offenbarungsgehalt der zuvor bereits genannten deutschen Offenlegungsschrift verwiesen. Besonders vorteilhaft ist es jedoch, wenn die Elektroden eine Wolfram-Carbid-Beschichtung aufweisen.

Das erfindungsgemäße magnetisch-induktive Durchflussmessgerät eignet sich besonders zum Einsatz in Rotationsfüllmaschinen zur Bestimmung des Füllvolumens von Behältern wie Flaschen oder Dosen. Es kann zwischen der Produktversorgung und einem Füllventil angeordnet sein, es kann aber auch Bestandteil eines Füllventils sein. Bei dieser Anwendung erfolgt die Durchflussmessung von mindestens zwei strömenden Medien, die sich in ihrer Menge, Dichte, Konsistenz, insbesondere ihrer Viskosität, Leitfähigkeit und Geschwindigkeit unterscheiden können. Insbesondere kann ein Medium Fasern, Partikel, Frucht- oder Gemüsestücke oder Cerealien enthalten.

Im einzelnen gibt es verschiedene Möglichkeiten, das erfindungsgemäße magnetisch-induktive Durchflussmessgerät auszugestalten und weiterzubilden, und verschiedene Möglichkeiten, ein magnetisch-induktives Durchflussmessgerät der eingangs beschriebenen Art zu betreiben. Dazu wird verwiesen einerseits auf die dem Patentanspruch 1 nachgeordneten Patentansprüche, andererseits auf das nachfolgend beschriebene und in der nur eine Figur enthaltenden Zeichnung dargestellte Ausführungsbeispiel.

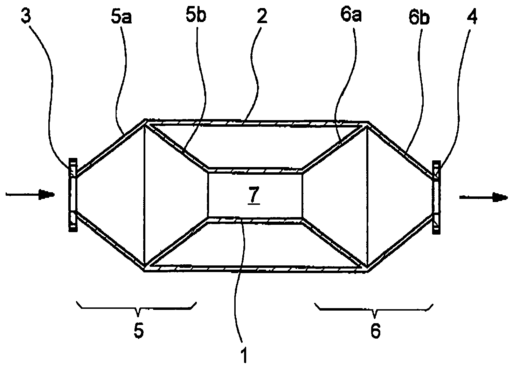

Das in der Zeichnung - im wesentlichen nur schematisch - dargestellte magnetisch-induktive Durchflussmessgerät ist bestimmt zur Durchflussmessung eines strömenden Mediums; es weist, funktionsnotwendig, auf eine Messleitung 1, eine nicht dargestellte Magnetfelderzeugungseinrichtung zur Erzeugung eines die Messleitung 1 wenigstens teilweise durchsetzenden Magnetfeldes, zu der zwei ebenfalls nicht dargestellte Magnetspulen gehören, und zwei ebenfalls nicht dargestellte Elektroden zum Abgreifen einer in dem strömenden Medium induzierten Messspannung. Zu dem dargestellten magnetisch-induktiven Durchflussmessgerät gehört weiter ein die Messleitung 1, die Magnetfelderzeugungseinrichtung und die Elektroden aufnehmendes Gehäuse 2, das einen kreisförmigen Querschnitt hat und im dargestellten Ausführungsbeispiel beidseitig mit Flanschen 3, 4 versehen ist. Die Messleitung 1 weist über die Länge einen veränderlichen Querschnitt auf, und der Querschnitt ist im mittleren Bereich der Messleitung 1 geringer als am Anfang der Messleitung 1 und an deren Ende; im Ausführungsbeispiel ist der Querschnitt der Messleitung 1 in ihrem mittleren Bereich rechteckig. Die Messleitung 1 besteht also aus einem Einlassabschnitt 5, einem Auslassabschnitt 6 und einem zwischen dem Einlassabschnitt 5 und dem Auslassabschnitt 6 verwirklichten Messabschnitt 7.

Das erfindungsgemäße magnetisch-induktive Durchflussmessgerät ist gegenüber den bekannten magnetisch-induktiven Durchflussmessgeräten, von denen die Erfindung ausgeht, erheblich verbessert, und zwar vor allem in Bezug auf seine Fähigkeit, auch bei sehr unterschiedlichen strömenden Medien, insbesondere auch bei flüssigen Medien, die Feststoffe in erheblicher Größe mit sich führen, eine beachtliche Genauigkeit der Durchflussmessung zu erreichen, und zwar dadurch, dass der Einlassabschnitt 5 der Messleitung 1 aus zwei Teilabschnitten 5a und 5b besteht und der in Strömungsrichtung gesehen erste Teilabschnitt 5a einen in Strömungsrichtung größer werdenden Querschnitt und der zweite Teilabschnitt 5b einen in Strömungsrichtung kleiner werdenden Querschnitt aufweisen.

Für das dargestellte Ausführungsbeispiel gilt, dass der erste Teilabschnitt 5a des Einlassabschnittes 5 der Messleitung 1 eingangsseitig einen im Verhältnis von etwa 1 : 3 kleineren Querschnitt als ausgangsseitig aufweist. Tatsächlich hat der erste Teilabschnitt 5a des Einlassabschnittes 5 der Messleitung 1 eingangsseitig einen Durchmesser von 15 mm und ausgangsseitig einen Durchmesser von 25 mm.

Im dargestellten Ausführungsbeispiel ist das erfindungsgemäße magnetisch-induktive Durchflussmessgerät auf der Ausgangsseite so aufgebaut, wie das zuvor für die Eingangsseite beschrieben ist. Der Auslassabschnitt 6 der Messleitung 1 besteht also auch aus zwei Teilabschnitten 6a, 6b. Dabei weisen der in Strömungsrichtung gesehen erste Teilabschnitt 6a einen in Strömungsrichtung größer werdenden Querschnitt und der zweite Teilabschnitt 6b einen in Strömungsrichtung kleiner werdenden Querschnitt auf.

Bei magnetisch-induktiven Durchflussmessgeräten darf die Messleitung 1, jedenfalls ihre dem strömenden Medium zugewandte Oberfläche, nicht elektrisch leitend sein. Im Ausführungsbeispiel ist deshalb die Messleitung 1 mit einer Halar-Beschichtung oder mit einer PEEK-Beschichtung versehen.

Für das dargestellte Ausführungsbeispiel gilt weiter, dass die Messleitung 1 in ihrem mittleren Bereich, also der Messabschnitt 7, einen rechteckigen Querschnitt aufweist. Der zweite Teilabschnitt 5b des Einlassabschnittes 5 der Messleitung 1 geht also von einem kreisförmigen Querschnitt in einen rechteckigen Querschnitt über. Dazu korrespondierend gilt, dass der erste Teilabschnitt 6a des Auslassabschnittes 6 der Messleitung 1 von einem rechteckigen Querschnitt in einen kreisförmigen Querschnitt übergeht. Der erste Teilabschnitt 5a des Einlassabschnittes 5 und der zweite Teilabschnitt 6b des Auslassabschnittes 6 haben vorzugsweise durchgehend einen kreisförmigen Querschnitt.

Für ein bevorzugtes Ausführungsbeispiel des erfindungsgemäßen magnetisch-induktiven Durchflussmessgeräts gilt weiter, dass die - nicht dargestellten - Elektroden an den Schmalseiten des Messabschnittes 7 der Messleitung 1 vorgesehen sind und eine Wolfram-Carbid-Beschichtung aufweisen.

Wie weiter oben ausgeführt, kann die Funktionalität des eingangs beschriebenen magnetisch-induktiven Durchflussmessgeräts, insbesondere auch die Funktionalität des erfindungsgemäßen magnetisch-induktiven Durchflussmessgeräts durch eine besondere Betriebsweise verbessert werden. Diese ist dadurch gekennzeichnet, dass die - nicht dargestellte - Magnetfelderzeugungseinrichtung mit einer Frequenz von 10 Hz bis 50 Hz, insbesondere mit einer Frequenz von 25 Hz, oder / und mit einem Strom (Spitze - Spitze) von 150 mA bis 350 mA, insbesondere von etwa 250 mA, bestromt wird.

Das erfindungsgemäße magnetisch-induktive Durchflussmessgerät kann insbesondere auch in Rotationsfüllmaschinen zur Bestimmung des Füllvolumens von Behältern wie Flaschen oder Dosen eingesetzt werden, und zwar entweder zwischen der Produktversorgung und einem Füllventil oder auch als Bestandteil eines Füllventils. Dabei erfolgt die Durchflussmessung von mindestens zwei strömenden Medien nacheinander, und zwar von Medien, die sich in ihrer Menge, Dichte, Konsistenz, vor allem also Viskosität, Leitfähigkeit und Geschwindigkeit unterscheiden können. Das erfindungsgemäße magnetisch-induktive Durchflussmessgerät kann Verwendung finden, wenn es sich bei dem strömenden Medium zum Beispiel um Bier, Softdrinks, Colagetränke, Mineralwasser, Sekt, Cooler-Getränke, Softdrinks mit Fruchtfleisch, Gemüsesäfte, Fruchtsäfte, stilles Wasser, Essig, Milch, Kakao, Milch-Mix-Gretränke, Fruchtfaser- und Zellenbrei, Pulpebrei, Fruchtmus, Fruchtstücke, Cerealien und Gemüsestücke in flüssiger Phase verteilt, handelt. Die in dem flüssigen Medium enthaltenen Feststoffe haben in der Regel maximale Abmessungen von 8 x 8 x 8 mm.

## Patentansprüche

1. Magnetisch-induktives Durchflussmessgerät zur Durchflussmessung eines strömenden Mediums mit einer Messleitung, mit einer Magnetfelderzeugungseinrichtung zur Erzeugung eines die Messleitung wenigstens teilweise durchsetzenden Magnetfeldes, mit zwei Elektroden zum Abgreifen einer in dem strömenden Medium induzierten Messspannung und mit einem die Messleitung, vorzugsweise auch die Magnetfelderzeugungseinrichtung und die Elektroden aufnehmenden Gehäuse, wobei die Messleitung über die Länge einen veränderlichen Querschnitt aufweist und vorzugsweise der Querschnitt im mittleren Bereich der Messleitung geringer ist als am Anfang der Messleitung und an deren Ende, vorzugsweise der Querschnitt der Messleitung in ihrem mittleren Bereich rechteckig, ggf. auch quadratisch ist, und wobei das Gehäuse vorzugsweise einen kreisförmigen Querschnitt hat,
**dadurch gekennzeichnet,**
**dass** der Einlassabschnitt (5) der Messleitung (1) aus zwei Teilabschnitten (5a und 5b) besteht und der in Strömungsrichtung gesehen erste Teilabschnitt (5a) einen in Strömungsrichtung größer werdenden Querschnitt und der zweite Teilabschnitt (5b) einen in Strömungsrichtung kleiner werdenden Querschnitt aufweisen.

2. Magnetisch-induktives Durchflussmessgerät nach Anspruch 1, **dadurch gekennzeichnet, dass** der erste Teilabschnitt (5a) des Einlassabschnittes (5) der Messleitung (1) eingangsseitig einen im Verhältnis 1 : 5 bis 1 : 2, vorzugsweise von etwa 1 : 3 kleineren Querschnitt als ausgangsseitig aufweist.

3. Magnetisch-induktives Durchflussmessgerät nach Anspruch 2, **dadurch gekennzeichnet, dass** der erste Teilabschnitt (5a) des Einlassabschnittes (5) der Messleitung (1) eingangsseitig einen Durchmesser von 15 mm und ausgangsseitig einen Durchmesser von 25 mm aufweist.

4. Magnetisch-induktives Durchflussmessgerät nach einem der Ansprüche 1 bis 3, **dadurch gekennzeichnet, dass** der Auslassabschnitt (6) der Messleitung (1) aus zwei Teilabschnitten (6a und 6b) besteht und der in Strömungsrichtung gesehen erste Teilabschnitt (6a) einen in Strömungsrichtung größer werdenden Querschnitt und der zweite Teilabschnitt (6b) einen in Strömungsrichtung kleiner werdenden Querschnitt aufweisen.

5. Magnetisch-induktives Durchflussmessgerät nach einem der Ansprüche 1 bis 4, **dadurch gekennzeichnet, dass** die Messleitung (1) mit einer Halar-Beschichtung oder mit einer PEEK-Beschichtung versehen ist.

6. Magnetisch-induktives Durchflussmessgerät nach einem der Ansprüche 1 bis 5, wobei die Messleitung in ihrem mittleren Bereich, also der Messabschnitt der Messleitung, einen rechteckigen Querschnitt aufweist, **dadurch gekennzeichnet, dass** die Elektroden an den Schmalseiten des Messabschnittes der Messleitung vorgesehen sind.

7. Magnetisch-induktives Durchflussmessgerät nach einem der Ansprüche 1 bis 6, **dadurch gekennzeichnet, dass** die Elektroden eine Wolfram-Carbid-Beschichtung aufweisen.

## Claims

1. Magnetic-inductive flowmeter for measuring the flow of a flowing medium with a measuring tube, with a magnetic field generator for generating a magnetic field that at least partially permeates the measuring tube, with two electrodes for detecting a measuring voltage induced in the flowing medium and with a housing accommodating the measuring tube, preferably also the magnetic field generator and the electrodes, wherein the measuring tube has a cross section that changes in a lengthwise direction, and, preferably, the cross section in the middle section of the measuring tube is less than at the beginning and at the end of the measuring tube, preferably, the cross section of the measuring tube is rectangular in its middle section, possibly also quadrangular, and wherein the housing preferably has a circular cross section,
**characterized in**
**that** an inlet section (5) of the measuring tube (1) is formed of two segments (5a, 5b), and the first segment (5a) in the direction of flow has a cross section that increases in a direction of flow and the second segment (5b) has a cross section that decreases in the direction of flow.

2. Magnetic-inductive flowmeter according to claim 1, **characterized in that** the first segment (5a) of the inlet section (5) of the measuring tube (1) has a cross section that is smaller on an input side than on an output side in a ratio of 1:5 to 1:2, preferably of about 1:3.

3. Magnetic-inductive flowmeter according to claim 2, **characterized in that** the first segment (5a) of the inlet section (5) of the measuring tube (1) has a diameter of 15 mm on the input side and a diameter of 25 mm on the output side.

4. Magnetic-inductive flowmeter according to any one of claims 1 to 3, **characterized in that** the outlet section (6) of the measuring tube (1) is formed of two segments (6a and 6b) and the first segment (6a) in the direction of flow has a cross section that increases in the direction of flow and the second segment (6b) has a cross section that decreases in the direction of flow.

5. Magnetic-inductive flowmeter according to any one of claims 1 to 4, **characterized in that** the measuring tube (1) is provided with a Halar coating or a PEEK coating.

6. Magnetic-inductive flowmeter according to any one of claims 1 to 5, wherein the measuring tube has a rectangular cross section in a middle, measuring section of the measuring tube, **characterized in that** the electrodes are provided on narrow sides of the measuring section of the measuring tube.

7. Magnetic-inductive flowmeter according to any one of claims 1 to 6, **characterized in that** the electrodes have a tungsten-carbide coating.

## Revendications

1. Débitmètre à induction magnétique pour la mesure du débit d'un fluide en circulation, comprenant une conduite de mesure avec un dispositif de génération de champ magnétique pour générer un champ magnétique traversant au moins en partie la conduite de mesure, avec deux électrodes pour prélever une tension de mesure induite dans le fluide en circulation et avec un boîtier recevant la conduite de mesure, de préférence également le dispositif de génération de champ magnétique et les électrodes, la conduite de mesure présentant une section transversale variable sur sa longueur et de préférence la section transversale dans la région centrale de la conduite de mesure étant inférieure à la section transversale au début de la conduite de mesure et à son extrémité, de préférence la section transversale de la conduite de mesure étant rectangulaire dans sa région centrale, éventuellement également carrée, et le boîtier ayant de préférence une section transversale circulaire,
**caractérisé en ce que**
la portion d'entrée (5) de la conduite de mesure (1) se compose de deux portions partielles (5a et 5b) et la première portion partielle (5a), vue dans la direction d'écoulement, présente une section transversale croissant dans la direction d'écoulement et la deuxième portion partielle (5b) présente une section transversale diminuant dans la direction d'écoulement.

2. Débitmètre à induction magnétique selon la revendication 1, **caractérisé en ce que** la première portion partielle (5a) de la portion d'entrée (5) de la conduite de mesure (1) présente du côté de l'entrée une section transversale plus petite que du côté de la sortie suivant un rapport de 1:5 à 1:2, de préférence d'environ 1:3.

3. Débitmètre à induction magnétique selon la revendication 2, **caractérisé en ce que** la première portion partielle (5a) de la portion d'entrée (5) de la conduite de mesure (1) présente du côté de l'entrée un diamètre de 15 mm et du côté de la sortie un diamètre de 25 mm.

4. Débitmètre à induction magnétique selon l'une quelconque des revendications 1 à 3, **caractérisé en ce que** la portion de sortie (6) de la conduite de mesure (1) se compose de deux portions partielles (6a et 6b) et la première portion partielle (6a), vue dans la direction d'écoulement, présente une section transversale croissant dans la direction d'écoulement et la deuxième portion partielle (6b) présente une section transversale diminuant dans la direction d'écoulement.

5. Débitmètre à induction magnétique selon l'une quelconque des revendications 1 à 4, **caractérisé en ce que** la conduite de mesure (1) est pourvue d'un revêtement de Halar ou d'un revêtement de PEEK.

6. Débitmètre à induction magnétique selon l'une quelconque des revendications 1 à 5, dans lequel la conduite de mesure présente, dans sa région centrale, c'est-à-dire la portion de mesure de la conduite de mesure, une section transversale rectangulaire, **caractérisé en ce que** les électrodes sont prévues au niveau des côtés étroits de la portion de mesure de la conduite de mesure.

7. Débitmètre à induction magnétique selon l'une quelconque des revendications 1 à 6, **caractérisé en ce que** les électrodes présentent un revêtement en carbure de tungstène.
